Europäisches Patentamt

European Patent Office

Office européen des brevets

(11) Publication number: **0 248 005**
**B1**

(12) **EUROPEAN PATENT SPECIFICATION**

(45) Date of publication of patent specification: **29.08.90**

(21) Application number: **86900608.0**

(22) Date of filing: **03.01.86**

(86) International application number:
**PCT/GB86/00003**

(87) International publication number:
**WO 86/04031 17.07.86 Gazette 86/17**

(51) Int. Cl.⁵: **B 62 D 59/02, B 60 K 25/06**

(54) **POWER TRANSMISSION COUPLING.**

(30) Priority: **05.01.85 GB 8500271**

(43) Date of publication of application:
**09.12.87 Bulletin 87/50**

(45) Publication of the grant of the patent:
**29.08.90 Bulletin 90/35**

(84) Designated Contracting States:
**AT BE DE FR GB IT NL SE**

(56) References cited:
**AU-A-6 420 965
DE-A-1 480 403
DE-A-2 742 305
FR-A-2 450 171
FR-A-2 537 932**

(73) Proprietor: **GARDNER, Joseph
Haversham House Farm Dolphineholme
Lancaster, LA2 9AR (GB)**

(72) Inventor: **GARDNER, Joseph
Haversham House Farm Dolphineholme
Lancaster, LA2 9AR (GB)**

(74) Representative: **Allman, Peter John et al
MARKS & CLERK Suite 301 Sunlight House Quay
Street
Manchester M3 3JY (GB)**

Courier Press, Leamington Spa, England.

# Description

The present invention relates to a power transmission coupling for driving the wheels of a trailer from a power take off on a tractor unit towing the trailer unit.

There are many circumstances in which it is desirable to be able to drive the wheels of a trailer being towed by a tractor unit. Driving the wheels of the trailer increases the combined traction of the tractor and trailer. This reduces the chances of the tractor and trailer becoming bogged down in soft ground and increase the ability of the tractor and trailer to travel up an incline in wet conditions for example. Particularly in the case of agricultural machinery the ability to drive the wheels of the trailer can dramatically improve the usefulness of a trailer unit by for example increasing the load which can be carried by the trailer or by increasing the range of uses to which the trailer unit can be put.

Agricultural tractors are typically provided with a power take off which is driven at a speed related to the tractor engine. Thus by coupling the power take off to the power transmission of a trailer the wheels of the trailer can be driven directly by the tractor. It is however highly desirable to ensure that the driven speed of the tractor wheels is substantially the same as the driven speed of the trailer wheels as if this is not the case wheel slip must inevitably occur. This can be achieved by matching trailer units to particular tractor units so that the wheel sizes of the trailer and tractor units and the gearing of the power output and the trailer transmission are such as to avoid wheel slip when the tractor is driven in a particular gear along a linear path. Unfortunately it is often highly desirable to be able to drive the tractor in any of its gears but changing gear in the tractor results in a mis-match between the tractor wheel speed and the trailer wheel speed and therefore in the known tractor-to-trailer coupling units trailer drive can only be selected when the tractor is in a particular predetermined gear. Even when matched tractor and trailer units are available and the appropriate tractor gear is selected, when the tractor turns a corner the trailer will generally follow a path inside that followed by the tractor. The distance travelled by the trailer is thus less than that followed by the tractor and therefore the trailer "pushes" the tractor. This can cause jackknifing with potentially serious consequences. Thus in practice few trailers used in general agricultural work have driven wheels.

It is an object of the present invention to obviate or mitigate the above problems.

According to the present invention there is provided a power transmission coupling for driving the wheels of a trailer from a power take off on a tractor unit towing the trailer unit, the coupling comprising a clutch having an input for connection to the power take off, an output for connection to a power transmission input of the trailer unit, means for monitoring the tension in the coupling when it connects the tractor and trailer units, and means responsive to the monitored tension to control the slippage of the clutch so as to maintain the speed at which the trailer unit is driven substantially the same as the speed at which the tractor unit is driven.

Preferably the clutch is designed so as to slip in all normal conditions, the speed of the input to the clutch being sufficiently high that if the input and output speeds of the clutch are the same the driven speed of the trailer is equal to or greater than the speed of the tractor in its highest gear.

The tension in the coupling can be monitored by a spring loaded lever system which fully releases the clutch when the tension is zero but progressively reduces the slippage in the clutch as the tension increases from a predetermined level. Thus as the tractor unit pulls away the tension in the coupling increases, increasing the torque delivered to the clutch output as the clutch engages progressively. The trailer unit is then driven to follow the tractor unit. As the trailer unit effectively catches up with the tractor unit the tension in the coupling unit is reduced and the slippage in the clutch increases. There is thus effectively a feed back system which ensures that the slippage on the clutch is just sufficient to match the speed across the ground of the tractor and trailer units.

The clutch may be in the form of a splined shaft which rotates with one or more clutch plates that are free to slide along the shaft. The splined shaft is received within a splined housing that rotates with at least one further clutch plate, the further clutch plate being slidable relative to the housing. The slippage of the clutch is determined by controlling the pressure applied between mating faces of the plates.

An embodiment of the present invention will now be described, by way of example, with reference to the accompanying drawings, in which:

Fig. 1 illustrates a power transmission coupling in accordance with the invention; and

Fig. 2 is an enlarged view of a detail of Fig. 1.

The drawings are highly schematic illustrations of a power transmission coupling intended to connect an agricultural tractor (not shown) to a trailer unit only the transmission shaft, back axle and wheels of which are shown.

Referring to the drawings, the trailer comprises a pair of rear wheels 1 (only one of which is shown) driven from a differential 2 by a conventional transmission shaft 3. The forward end of the transmission shaft is connected by universal joint 4 to the end of an output shaft 5 of a clutch assembly 6, the output shaft running in sealed bearings 7. The output shaft 5 is fixedly secured to a splined body 8 on which a series of annular clutch plates 9 are axially slidable. The splined body 8 cannot move axially relative to the clutch assembly 6.

A cup shaped housing 10 which is provided with axially extending internal splines is arranged around the body 8 and is engaged internally by a series of annular clutch plates 11, the plates being slidable axially relative to the housing 10. Plates 11 are arranged alternately with the plates 9 so that each plate 11 is constrained to rotate with the housing 10 between a pair of plates 9 which are constrained to rotate with the body 8.

The housing 10 is supported in sealed bearing 12 so as to be prevented from moving axially relative to the assembly 6. The housing 10 is driven by transmission shaft 13 connected by a conventional universal joint 14 to a splined power take off 15 of a tractor unit (not shown). The joint 14 can slide axially relative to the power take off 15.

A clutch actuating member 16 is slidable axially relative to the transmission shaft 5 and can rotate relative to a bearing plate 17 secured by a rod 18 to a lever 19. The lever is pivotal about pivot point 20 and is pivotally connected by a rod 21 to a spring loaded actuator 22. One end of the actuator unit 22 is connected to the tractor unit (not shown) and the other end is connected to the rod 21. The actuator unit 22 is slidably supported on a frame member 23 which supports the clutch assembly 6. Thus the position of the actuator member 22 relative to the frame member 23 corresponds to the pulling force applied by the tractor unit to the trailer unit, and this pulling force corresponds to the tension in the coupling.

The clutch assembly 6 incorporates an oil bath so that the clutch plates 9 and 11 run in the oil which serves both to provide a controlled degree of slip between the plates 9 and 11 and to dissipate heat generated by the friction between the plates 9 and 11.

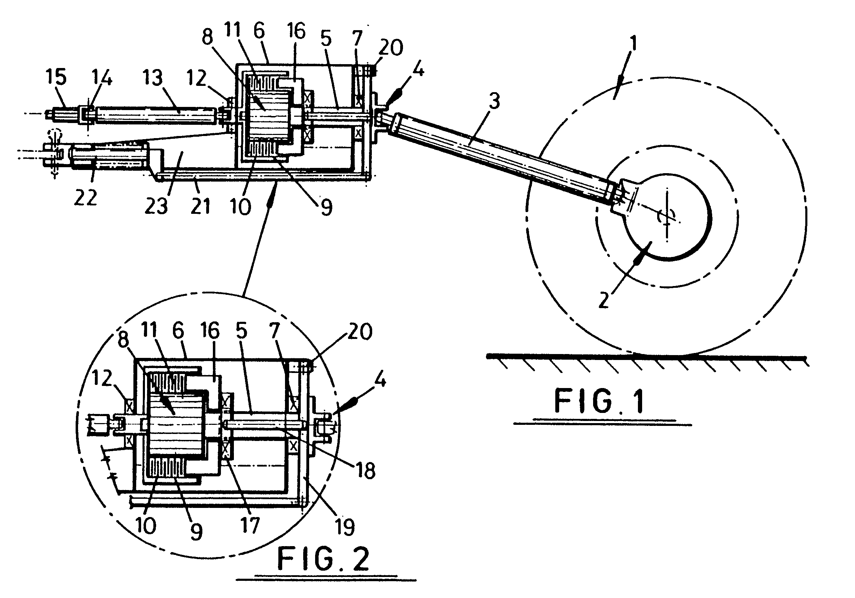

When the tractor unit sets off in the forward direction the clutch is initially disengaged but as the tension in the actuator unit 22 builds up it moves to the left in Fig. 1 relative to the frame member 23 and as a result the member 16 compresses the series of plates 9 and 11 together, the pressure determining the torque transmitted to the output shaft 5. The trailer wheels 1 are thus driven and the trailer begins to follow the tractor unit. The speed at which the trailer moves increases until the tension in the actuator 22 decreases, thereby reducing the pressure on the plates 9 and 11 and reducing the torque delivered to the output shaft 5. The slippage within the clutch is thus adjusted to be sufficient to match the speed of the trailer unit to that of the tractor unit.

It would be possible to associate with the actuator 22 a device which automatically applies brakes provided on the trailer unit if the trailer unit starts to push the tractor unit, as could occur for example if the tractor unit is attempting to move slowly down a steep incline with the trailer unit behind it. Such an arrangement is not shown in the accompanying drawings.

The illustrated arrangement can provide drive in only one (the forward) direction. It would however be possible to provide a separate clutch assembly operating in the reverse sense to that illustrated to enable the trailer wheels to be driven in reverse when the tractor unit is pushing rather than pulling the trailer unit.

It would be possible for a tractor unit to become bogged down in soft ground and unable to move forward. In such a circumstance the tractor would not be able to apply tension to the coupling and therefore it would not be possible for drive to be transmitted to the trailer wheels. To cover such an eventuality it would be possible to provide a mechanical and/or hydraulic override system which would enable the clutch mechanism to be engaged temporarily to enable the trailer unit to effectively push the tractor unit.

## Claims

1. A power transmission coupling for driving wheels (1) of a trailer from a power take off (15) on a tractor unit towing the trailer unit, the coupling comprising a clutch (6) having an input (13) for connection to the power take off, an output (5) for connection to a power transmission input (3) of the trailer unit, means (19, 20, 21, 22) for monitoring the tension in the coupling when it connects the tractor and trailer units, and means (16) responsive to the monitored tension to control the slippage of the clutch so as to maintain the speed at which the trailer unit is driven substantially the same as the speed at which the tractor unit is driven at least when the trailer is being driven.

2. A power transmission coupling according to claim 1, wherein the clutch (6) is designed so as to slip in all normal driving conditions.

3. A power transmission coupling according to claim 1 or 2, wherein the tension in the coupling is monitored by a spring loaded lever system (19, 20, 21, 22) which fully disengages the clutch (6) when the tension is zero but progressively reduces the slippage in the clutch as the tension increases from a predetermined level.

4. A power transmission coupling according to any preceding claim, wherein the clutch comprises a splined shaft (8) which rotates with one or more clutch plates (9) that are free to slide along the shaft (8), and a splined housing (10) which rotates with at least one further clutch plate (11) that is slidable relative to the housing, the shaft mounted clutch plates (9) being arranged adjacent the housing mounted clutch plates (11) and the slippage of the clutch being determined by controlling the pressure applied between the faces of the adjacent plates (9, 11).

5. A power transmission coupling according to any preceding claim, comprising additional manually actuable means for controlling the slippage of the clutch.

## Patentansprüche

1. Kraftübertragungskopplung zum Antreiben der Räder (1) eines Anhängefahrzeugs von einem, an einem das Anhängefahrzeug schleppenden Traktor angebrachten Zapfwellenantrieb (15), wobei die Kopplung eine Kupplung (6) mit einem mit dem Zapfwellenantrieb verbindbaren Eingangsteil (13) und einem mit einem Kraftübertragungseingangsteil (3) des Anhängefahrzeugs verbindbaren Ausgangsteil (5), eine Einrichtung (19, 20, 21, 22) zum Überwachen der Spannung in der Kopplung, wenn diese Traktor und Anhängefahrzeug miteinander verbindet, und eine Einrichtung (16), die auf die überwachte Spannung anspricht, um den Schlupf der Kupplung so zu kontrollieren, daß, zumindest während das Anhängefahrzeug angetrieben wird, die Geschwindigkeit, mit der das Anhängefahrzeug angetrieben wird im wesentlichen gleich bleibt wie die Geschwindigkeit, mit der der Traktor angetrieben wird, umfasst.

2. Kraftübertragungskopplung nach Anspruch 1, dadurch gekennzeichnet, daß die Kupplung (6) so ausgelegt ist, daß bei allen normalen Fahrbedingungen ein Schlupf stattfindet.

3. Kraftübertragungskopplung nach Anspruch 1 oder 2, dadurch gekennzeichnet, daß die Spannung in der Kopplung durch einen federbeaufschlagten Hebelmechanismus (19, 20, 21, 22) überwacht wird, der vollständig von der Kupplung (6) abkoppelt wenn die Spannung gleich Null ist, der den Schlupf in der Kupplung aber zunehmend verringert, wenn die Spannung sich von einem vorbestimmten Wert aus erhöht.

4. Kraftübertragungskopplung nach einem der vorhergehenden Ansprüche, dadurch gekennzeichnet, daß die Kupplung eine Keilwelle (8), die mit einer oder mehreren frei entlang der Welle (8) gleitenden Kupplungsplatten (9) rotiert, und ein Keilgehäuse (10) umfasst, das mit mindestens einer weiteren, relativ zum Gehäuse gleitbaren Kupplungsplatte (11) rotiert, wobei die auf der Welle befestigten Kupplungsplatten (9) neben den auf dem Gehäuse befestigten Kupplungsplatten (11) angeordnet sind, und wobei der Schlupf der Kupplung dadurch bestimmt wird, daß der zwischen den Stirnseiten der nebeneinanderliegenden Platten (9, 11) aufgebrachte Druck kontrolliert wird.

5. Kraftübertragungskopplung nach einem der vorhergehenden Ansprüche, welche zum Kontrollieren des Schlupfes der Kupplung eine zusätzliche, manuell betätigbare Einrichtung umfasst.

**Revendications**

1. Un accouplement de transmission de puissance pour entraîner les roues (1) d'une remorque à partir d'une prise de sortie de puissance (15) sur une unité de tracteur tirant l'unité de remorque, l'accouplement comprenant un embrayage (6) ayant une entrée (13) pour le raccordement avec la prise de sortie de puissance, une sortie (15) pour le raccordement avec l'entrée de transmission de puissance (3) de l'unité de remorque, des moyens (19, 20, 21, 22) pour surveiller la tension dans l'accouplement lorsqu'il raccorde les unités de tracteur et de remorque et un moyen (16) sensible à la tension surveillée pour contrôler le glissement de l'embrayage de manière à maintenir la vitesse à laquelle l'unité de remorque est entraînée sensiblement égale à celle à laquelle l'unité de tracteur est entraînée, au moins lorsque la remorque est entraînée.

2. Un accouplement de transmission de puissance selon la revendication 1, dans lequel l'embrayage (6) est conformé de manière à glisser dans toutes les conditions d'entraînement normales.

3. Un accouplement de transmission de puissance selon la revendication 1 ou 2, dans lequel la tension dans l'accouplement est surveillée par un système à levier chargé par ressort (19, 20, 21, 22) qui débraye totalement l'embrayage (6) lorsque la tension est nulle mais réduit progressivement le glissement dans l'embrayage lorsque la tension augmente à partir d'un niveau prédéterminé.

4. Un accouplement de transmission de puissance selon l'une quelconque des revendications précédentes, dans lequel l'embrayage comporte un arbre cannelé (8) qui tourne avec un ou plusieurs disques d'embrayage (9) qui sont libres de coulisser le long de l'arbre (8) et un boîtier cannelé (10) qui tourne avec au moins un disque supplémentaire (11) qui peut coulisser par rapport au boîtier, les disques d'embrayage (9) montés sur l'arbre étant disposés en position adjacente aux disques d'embrayage (11) montés sur le boîtier, et le glissement de l'embrayage étant déterminé en réglant la pression appliquée entre les faces des disques adjacents (9, 11).

5. Un accouplement de transmission de puissance selon l'une quelconque des revendications précédentes, comportant des moyens supplémentaires pouvant être actionnés manuellement pour régler le glissement de l'embrayage.

FIG. 1

FIG. 2